# EUROPEAN PATENT SPECIFICATION

(11) **EP 0 289 974 B1**
(45) Date of publication and mention of the grant of the patent: **31.03.1993**
(21) Application number: 88106998.3
(22) Date of filing: 02.05.1988
(51) Int. Cl.: F23C 11/02

(54) **Power plant for burning a fuel in a fluidized bed of particulate material**
Kraftwerk zum Verbrennen von Brennstoff in einem Wirbelbett aus teilchenförmigem Material
Centrale électrique pour la combustion d'un combustible dans un lit fluidisé de matériau en grains

(30) Priority: 07.05.1987 SE 8701882
(43) Date of publication of application: 09.11.1988
(73) Proprietor: ABB STAL AB, S-612 20 Finspang (SE)
(72) Inventor: Jonsson, Arne, S-612 00 Finspong (SE)
(74) Representative: Boecker, Joachim, Dr.-Ing.

(56) References cited:
- DE-A- 3 527 825
- DE-C- 277 612
- SU-A- 1 149 105
- US-A- 3 096 104
- US-A- 4 268 244

## Description

The invention relates to a power plant for burning a fuel in a fluidized bed of particulate material according to the precharacterising part of Claim 1. Such a power plant is described in the US-A-4 268 244.

The invention is applicable for both plants in which the combustion is performed at atmospheric pressure and plants with the combustion taking place at a pressure considerably exceeding the atmospheric pressure, for example a so-called PFBC power plant with a combustion chamber placed inside a pressure vessel and surrounded by compressed combustion air in the space between the pressure vessel and the bed vessel. The term "PFBC" is formed of the initial letters of the English expression "Pressurized Fluidized Bed Combustion".

In plants with a bed vessel having an open bed bottom with parallel air distribution tubes and a combustion chamber above the bed bottom and one or more ash chambers with cooled walls below the bed bottom, temperature differences between the ash chamber and the air distribution tubes involve constructive problems owing to the different thermal expansion of the different structural members. The temperature differences are particularly great upon start-up of the plant and injection of 800-900°C hot combustion gases from a start-up combustion chamber through the air distribution tubes of the bed bottom for heating the bed material to the auto-ignition temperature of a fuel.

In a power plant of the above kind, which is described in the US-A-4,268,244, a number of air distribution tubes of circular cross-section are connected individually to an air distribution chamber, arranged perpendicularly to the tubes, by a connecting tube. In an embodiment of the kind shown with a sufficient cross-section of the air distribution tubes and a suitable distance between these for satisfactory fluidization of the bed and good combustion of fuel, the distance between the air distribution tubes will be small and the gap size unsatisfactory. Slag lumps formed during the combustion are unable to pass to the ash chamber below the tubes and the combustion is disturbed. This results in eventual interruption of the operation.

The invention aims at designing a power plant for burning a fuel in a fluidized bed of particulate material which design enables the above-mentioned slag slumps to pass through the bed bottom without impairing the air distribution for fluidization of the bed and combustion of the fuel, and which design avoids excessive pressure drops in the air distribution system. Further the design shall be such as to limit mechanical strain due to different thermal expansion of the construction parts of the air distribution system.

To achieve this aim the invention suggests a power plant for burning a fuel in a fluidized bed of particulate material according to the introductory part of Claim 1, which is characterized by the features of the characterizing part of Claim 1. Further developments of the invention are characterized by the features of the additional claims.

According to the invention, the bed bottom of a bed vessel is provided with air distribution tubes with a considerably greater height than width. The ratio between height and width should be greater than 2:1, suitably greater than 3:1. With such a design a sufficient width of gaps between the air distribution tubes, in view of slag formation, can be obtained at a suitable distance between the tubes taking into consideration the required distance pattern of the nozzles for obtaining good fluidization and combustion conditions. Gap widths of 40 mm can be obtained without difficulty. This width is sufficient in view of the unavoidable formation of minor slag lumps. For cooling of material in the ash chamber by injecting combustion air, a large area of the gaps between the air distribution tubes is desirable. A large area reduces the risk of this cooling air causing fluidization of the material in the gaps.

The area of a cylindrical connecting tube between an air distribution tube and an air distribution chamber is insufficient for the air quantity in question. A high air speed would cause undesired pressure drops and energy losses. Rectangular connection conduits involve design difficulties, especially in view of thermal stresses by different expansion of different structural members. By connecting the air distribution tubes in groups of several tubes to the air distribution chamber by means of a cylindrical connection conduit, constructed as a so-called thermo-sleeve, a sufficient flow area and sufficient possibilities for movement between plant components which are heated to different degrees can be obtained. By connection "in groups" is meant that at least two air distribution tubes are connected to the air distribution chamber by a common connection conduit. The connection conduit, or thermo-sleeve, may be built up of two concentric tubes. The tubes may be constructed from two concentric sleeves. The inner sleeve is connected at its upper end to one or more air distribution tubes. The lower ends of the sleeves are joined together. The outer sleeve is connected at its upper end to an upper wall in the transversely extending air distribution chamber. The sleeves suitably have circular cross-sections.

The bed vessel is suitably formed with two parallel ash chambers. The air distribution chamber is placed between the ash chambers, the walls of the ash chambers constituting also side walls of the air distribution chamber.

In a preferred embodiment of the invention, a vertical duct is provided below the air distribution chamber and a combustion chamber is provided in the lower part of the duct, the task of the combustion chamber being to generate hot gas for heating the bed upon start-up of the plant. The duct has a horizontal wall, an outlet tube passing up through this wall from the start-up combustion chamber. Both above and below this horizontal wall, the duct communicates with a compressed air source which supplies the plant with compressed combustion air. The communication above the horizontal wall includes a valve so that the entire air quantity from the combustion air source can be controlled to pass through the start-up combustion chamber.

The invention will now be described in greater detail with reference to the accompanying drawings showing - by way of example - in
- Figures 1 and 2: schematically a vertical section each of a PFBC power plant in two planes perpendicular to each other,
- Figures 3 and 4: the connection between the air distribution chamber and elongated air distribution tubes provided with fluidization nozzles, forming an open bed bottom,
- Figure 5: a perspective view which also shows the connection between the air distribution chamber and the air distribution tubes,
- Figure 6: on an enlarged scale a schematic view of the lower part of the bed vessel with the air distribution chamber and the start-up combustion chamber in the same section as Figure 1.

In the figures, the numeral 10 designates a pressure vessel. In it are located a bed vessel 12 and a cleaning plant with cyclones 14 for separation of dust from combustion gases generated upon combustion of a fuel in a fluidized bed 16 in the combustion chamber 11 in the bed vessel 12. The combustion gases which collect in the freeboard 18, are passed through the conduits 20 to the cyclones 14 and therefrom through the conduits 22 to a gas turbine 24. Several groups of series-connected cyclones 14 are provided. The turbine 24 drives a compressor 26 and a generator 28. Combustion air compressed in the compressor 24 is supplied via the conduit 29 to the space 30 in the pressure vessel 10. In the bed vessel 12 there are tubes 32 for generation of steam to drive a steam turbine (not shown) and for cooling of the bed 16. Dust separated in the cyclones 14 is discharged via pressure-reducing discharge devices 15 and is collected in a container 17.

The bed vessel 12 is provided with an open bed bottom 34 consisting of a number of elongated air distribution tubes 36 with fluidization nozzles 38. The bottom 34 divides the bed vessel 12 into an upper part with the combustion chamber 11 and the freeboard 18 and a lower part with two parallel ash chambers 40. Material from the bed 16 can pass down into the ash chambers 40 through the gaps 42 between the air distribution tubes 36. Air for cooling of the material in the ash chambers 40 may be introduced through tubes 41 with nozzles 43. Air direct from the space 30 can be utilized as coolant.

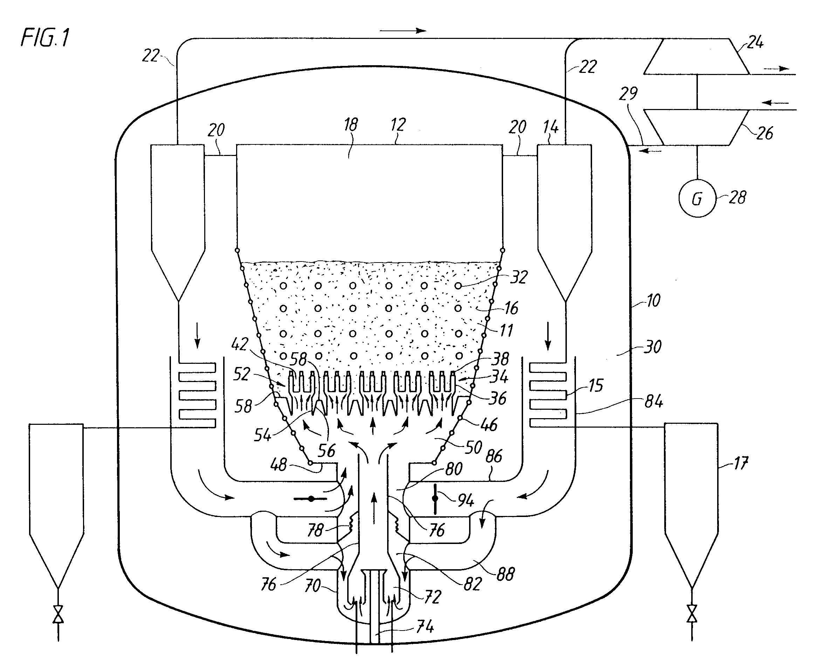

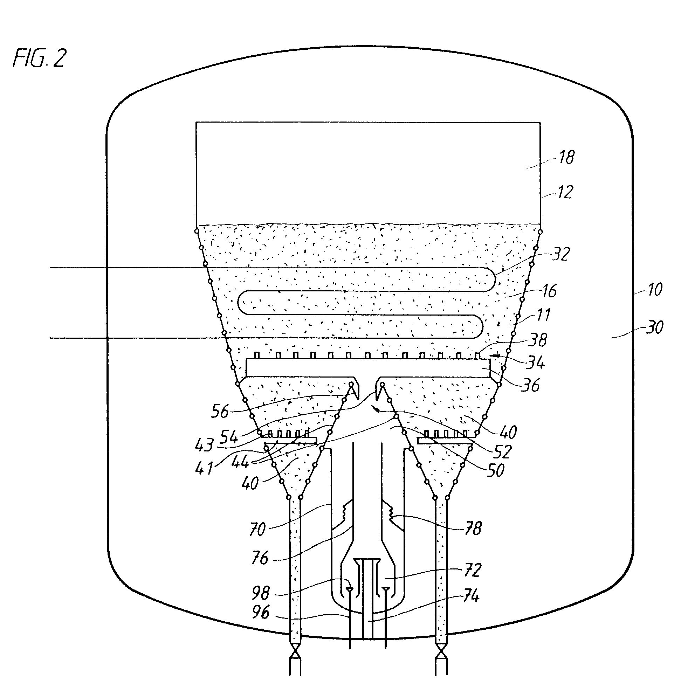

An air distribution chamber 50 is formed by the inner side walls 44 (Figure 2) of the ash chambers 40, walls 46 (Figure 1) extending between the side walls, and horizontal walls 48 and 58. From this chamber 50 the air distribution tubes 36 are supplied in groups - in the figures each group comprises three such tubes 36 - with combustion air via one downwardly extending double-walled connection tube 52 (thermo-sleeve) with an inner sleeve 54 and an outer sleeve 56. The inner sleeve 54 is connected to the three air distribution tubes 36. The inner sleeve 54 and the outer sleeve 56 are joined to each other at their lower ends. At its top, the outer sleeve 56 is connected to the horizontal wall 58 which upwardly defines the chamber 50.

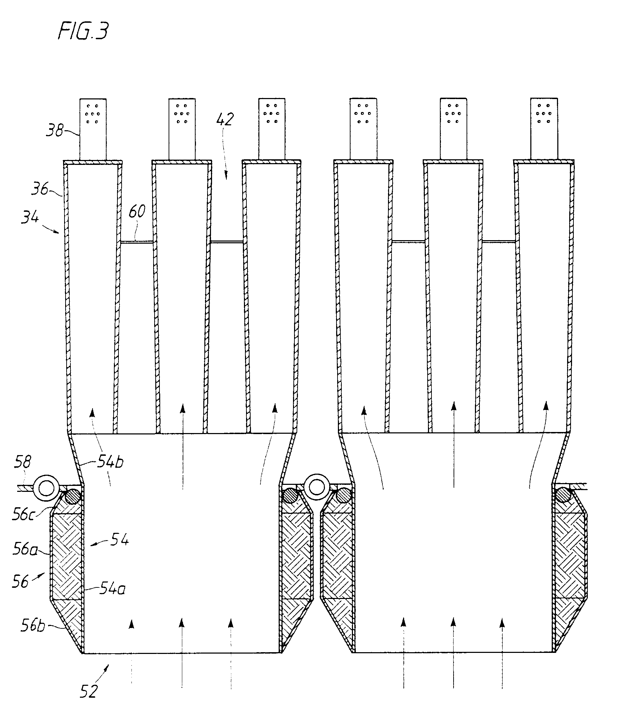

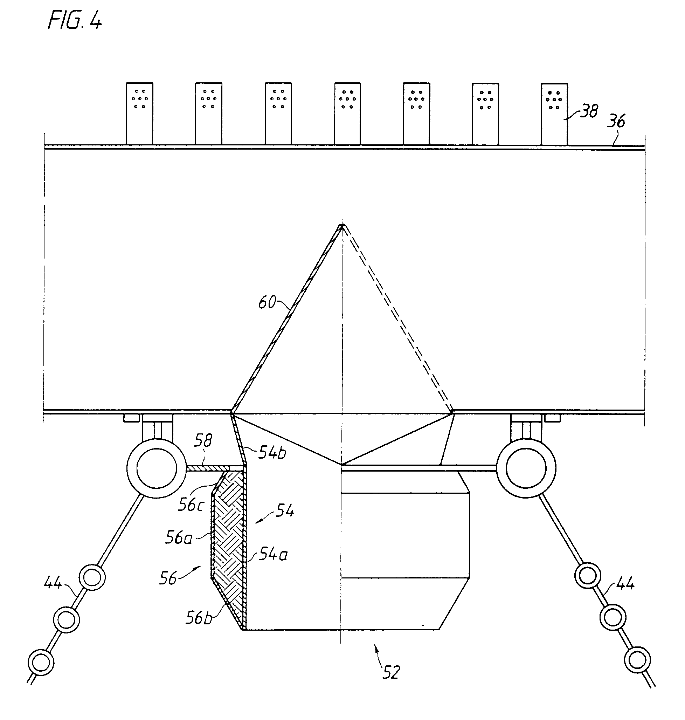

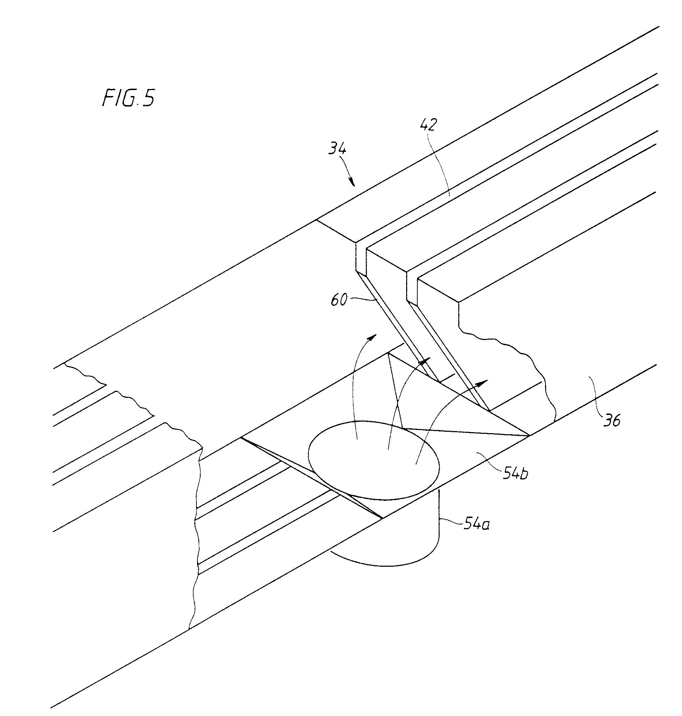

As shown in more detail in Figures 3,4 and 5, the inner sleeve 54 of the connection tube 52 consists of an inner cylindrical part 54a and a tunnel-like transition part 54b which connects the sleeve 54 to the associated three air distribution tubes 36. The outer sleeve 56 consists of a central cylindrical part 56a, a lower conical part 56b, which is joined to the lower cylindrical part 54a of the inner sleeve 54, and an upper conical part 56c, which is connected to the horizontal wall 58. Between the air distribution tubes 36 there are inclined sheets 60. These sheets 60 form a roof over the tube 52 and delimit the space above the orifice of the tube 52 from the space containing the bed 16.

Upon start-up of the plant with hot gas from the start-up combustion chambers 72, which gas is supplied to the bed 16 via the air distribution tubes 36, the temperature differences between different structural members are great. Because of the construction of the connection tube (thermosleeve) 52 with an inner sleeve 54 and an outer sleeve 56, the structural members included may thermically expand to different degrees without impermissible stresses arising.

Below the bed vessel 12 there is a vertical duct 70 which is closed at the bottom and which opens out at the top into the air distribution chamber 50. The duct 70 is connected to the lower wall 48 of the air distribution chamber 50. At the lower part of the duct 70 there are a number of start-up combustion chambers 72 which are supported by a column 74. These start-up combustion chambers 72 are connected on their outlet side to an inner duct 76. Between the ducts 70 and 76 there is a horizontal or inclined wall 78 which divides the annular space between said two ducts 70 and 76 into an upper space 80 and a lower space 82. These spaces 80 and 82 communicate with the space 30, holding compressed combustion air, via the duct 84 (Figure 1) and the conduits 86 and 88. In the duct 84 the pressure reducing ash discharge device 15, designed as an ash cooler, is arranged. It is connected to the receiving container 17 for ashes. In the air conduit 86 there is a valve 94. The start-up combustion chambers 72 are supplied with fuel, gas or oil via the conduits 96 and the burners 98.

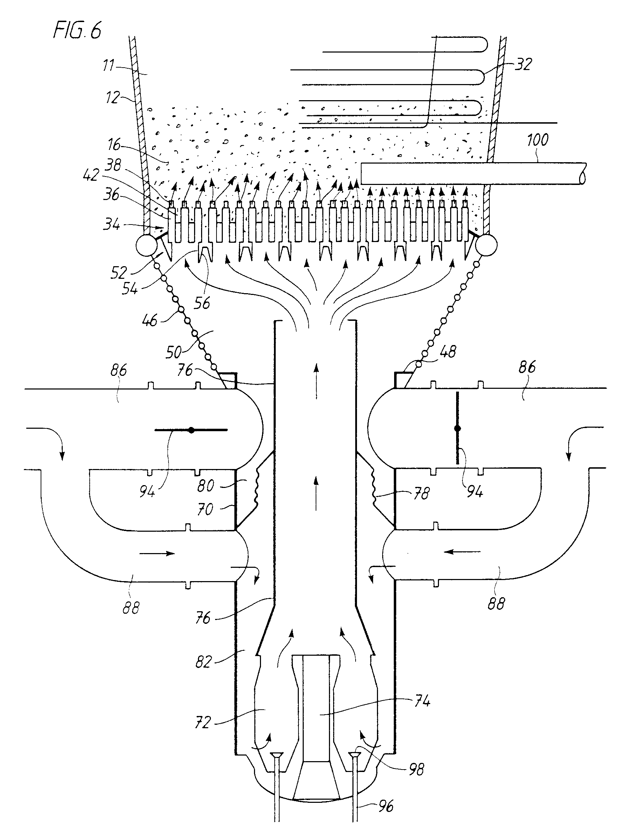

Upon start-up of the plant, the air supply to the space 80 is shut off by the valve 94 in the conduit 86, as shown in the righthand part in Figure 1 and in Figure 6, and air is merely channelled to the lower annular space 82 and the start-up combustion chambers 72. The combustion chambers are supplied with fuel through the conduits 96, the hot combustion gases are led via the inner duct 76 to the air distribution chamber 50 and are distributed therefrom via the double-walled tubes 52 (thermo-sleeves) to the air distribution tubes 36 and the nozzles 38 for heating the bed 16. When the bed 16 has reached a temperature sufficiently high for self-ignition of fuel, the valve 94 is opened and the bed 16 is supplied with fuel through a fuel pipe 100.

The fuel supply to the start-up combustion chambers 72 is interrupted. Combustion air is now directly supplied to the air distribution chamber 50, partly through the conduit 86 and the space 80, partly via the conduit 88, the start-up combustion chambers 72 and the inner duct 76.

## Claims

1. Power plant for burning a fuel, primary coal, in a fluidized bed (16) of particulate material, comprising
a bed vessel (12),
a number of parallel air distribution tubes (36) with nozzles (38) which form a bed bottom (34) and divide the bed vessel (12) into an upper part with a combustion chamber (11) and a freeboard (18) over the fluidized bed (16) and a lower part forming an ash chamber (40) for withdrawing ashes and consumed bed material,
gaps (42) between the air distribution tubes (36), through which ash and bed material may pass from the combustion chamber (11) to the ash chamber (40), and
below the bed bottom (34), an air distribution chamber (50) from which the air distribution tubes (36) are supplied with combustion air for fluidization of the bed (16) and combustion of fuel in the bed (16),
**characterized** in that the air distribution tubes (36) have an essentially greater height than width and that the air distribution tubes (36) are connected in groups to the air distribution chamber (50) by a common, substantially cylindrical connection tube (52) of a so-called thermosleeve-type that permits different thermal expansion of an upper wall (58) of the air distribution chamber (50) and the air distribution tubes (36).

2. Power plant according to Claim 1, **characterized** in that the air distribution tubes have a substantially rectangular cross-section.

3. Power plant a according to Claim 1 or 2, **characterized** in that the ratio between the height and width of the air distribution tubes (36) is greater than 2:1, preferably greater than 3:1.

4. Power plant according to any of the preceding Claims, **characterized** in that the connection tube (52) of thermo-sleeve-type comprises an inner sleeve (54) and an outer sleeve (56), that the inner sleeve (54) at its upper end is connected to at least two air distribution tubes (36), that the sleeves (54,56) at their lower ends are connected to each other, and that the outer sleeve (56) at its upper end is connected to a wall (58) of the air distribution chamber (50).

5. Power plant according to Claim 4, **characterized** in that the connection tube (52) is formed with a transition part (54b) having a rectangular cross-section at the plane of connection to the air distribution tubes (36).

6. Power plant according to any of the preceding Claims, **characterized** in that
the bed vessel (12) is formed with at least two ash chambers (40),
the air distribution chamber (50) is placed between the ash chambers (40), and that
the side walls (44,46) of the ash chambers (40) also form side walls of the air distribution chamber (50).

7. Power plant according to any of the preceding Claims, **characterized** in that
a first vertical duct (70) is arranged below the air distribution chamber (50),
at least one start-up combustion chamber (72) for preheating the bed (16) is arranged in the lower part of said first duct (70),
inside said first duct (70) there is a second duct (76) forming an outlet from the start-up combustion chamber (72),
between the ducts (70,76) there is a wall (78) dividing the annular space between said two ducts (70,76) into an upper space (80) and a lower space (82),
the two spaces (80,82) between the ducts (70,76) communicate with a compressed air source (30), and
an air valve (94) is provided in the connection between said compressed air source (30) and the upper space (80).

## Patentansprüche

1. Kraftwerksanlage zur Verbrennung von Brennstoff, vorzugsweise Kohle, in einem Wirbelbett (16) aus partikelförmigem Material mit
einem Bettgefäß (12),
einer Anzahl paralleler Luftverteilungsrohre (36) mit Düsen (38), die einen Bettboden (34) bilden und das Bettgefäß (12) in einen oberen Teil mit einer Brennkammer (11) und einem Freiraum (18) über dem Wirbelbett (16) und einen unteren Teil unterteilen, der eine Aschenkammer (40) für abgezogene Asche und verbrauchtes Bettmaterial bildet,
Spalten (42) zwischen den Luftverteilungsrohren (36), durch welche Asche und Bettmaterial aus der Brennkammer (11) in die Aschenkammer (40) passieren kann, und
einer unter dem Bettboden (34) angeordneten Luftverteilungskammer (50), von der aus die Luftverteilungsrohren (36) mit Verbrennungsluft zur Fluidisation des Bettes (16) und zur Verbrennung des Brennstoffes im Bett (16) versorgt werden,
**dadurch gekennzeichnet**, daß die Luftverteilungsrohre (36) eine wesentlich größere Höhe als Breite haben und daß die Luftverteilungsrohre (36) gruppenweise an die Luftverteilungskammer (50) angeschlossen sind durch ein gemeinsames, im wesentlichen zylindrisches Verbindungsrohr (52) von Art einer sogenannten Thermohülse, welches unterschiedliche Wärmeausdehnungen der oberen Wand (58) der Luftverteilungskammer (50) und der Luftverteilungsrohre (36) zuläßt.

2. Kraftwerksanlage nach Anspruch 1, **dadurch gekennzeichnet**, daß die Luftverteilungsrohre einen im wesentlichen rechteckigen Querschnitt haben.

3. Kraftwerksanlage nach einem der Ansprüche 1 oder 2, **dadurch gekennzeichnet,** daß das Verhältnis von Höhe und Breite der Luftverteilungsrohre (36) größer als 2:1, vorzugsweise größer als 3:1 ist.

4. Kraftwerksanlage nach einem der vorhergehenden Ansprüche, **dadurch gekennzeichnet,** daß das Verbindungsrohr (52) vom Thermohülsentyp aus einer inneren Hülse (54) und einer äußeren Hülse (56) besteht, daß die innere Hülse (54) an ihrem oberen Ende mit mindestens zwei Luftverteilungsrohren (36) verbunden ist, daß die Hülsen (54, 56) an ihren unteren Enden miteinander verbunden sind und daß die äußere Hülse (56) an ihrem oberen Ende mit einer Wand (58) der Luftverteilungskammer (50) verbunden ist.

5. Kraftwerksanlage nach Anspruch 4, **dadurch gekennzeichnet,** daß das Verbindungsrohr (52) an der Anschlußebene an die Luftverteilungsrohre (36) ein Übergangsteil (54b) mit rechteckigem Querschnitt hat.

6. Kraftwerksanlage nach einem der vorhergehenden Ansprüche, **dadurch gekennzeichnet,** daß
das Bettgefäß (12) mindestens zwei Aschenkammern (40) hat,
die Luftverteilungskammer (50) zwischen den Aschenkammern (40) angeordnet ist, und
die Seitenwände (44, 46) der Aschenkammern (40) zugleich die Seitenwände der Luftverteilungskammer (50) bilden.

7. Kraftwerksanlage nach einem der vorhergehenden Ansprüche, **dadurch gekennzeichnet,** daß
unter der Luftverteilungskammer (50) ein erster vertikaler Kanal (70) angeordnet ist,
zumindest eine Start-Brennkammer (72) zur Vorheizung des Bettes (16) im unteren Teil des genannten ersten Kanals (70) angeordnet ist,
im inneren des ersten Kanals (70) ein zweiter Kanal (76) vorhanden ist, der einen Ausgang von der Start-Brennkammer (72) bildet,
zwischen den Kanälen (70,76) eine Wand (78) vorhanden ist, welche den ringförmigen Raum zwischen den beiden Kanälen (70, 76) in einen oberen Raum (80) und einen unteren Raum (82) unterteilt,
die beiden Räume (80, 82) zwischen den Kanälen (70, 76) mit einer Druckluftquelle (30) in Verbindung stehen und
ein Luftventil (94) in der Verbindung zwischen der genannten Druckluftquelle (30) und dem oberen Raum (80) vorhanden ist.

## Revendications

1. Centrale électrique pour brûler du combustible, principalement du charbon, dans un lit fluidisé (16) de matière en particules, comprenant
une enceinte de lit (12)
un certain nombre de tubes (36) parallèles de répartition d'air ayant des buses (38) qui forment un fond (34) de lit et qui subdivisent l'enceinte (12) du lit en une partie supérieure ayant une chambre de combustion (11) et un espace libre (18) au-dessus du lit (16) fluidisé, et en une partie inférieure formant un cendrier (40) pour soutirer des cendres et de la matière épuisée du lit,
des intervalles (42) entre les tubes (36) de répartition d'air, par lesquels de la cendre et de la matière du lit peuvent passe de la chambre de combustion (11) au cendrier (14), et
en-dessous du fond (34) du lit, une chambre (50) de répartition d'air de laquelle les tubes (36) de répartition d'air sont alimentée en de l'air de combustion pour la fluidisation du lit (16) et pour la combustion du combustible dans le lit (16),
caractérisée en ce que les tubes (36) de répartition d'air ont une hauteur nettement plus grande que la largeur et en ce que les tubes (36) de répartition d'air sont reliés en groupes à la chambre (50) de répartition d'air par un tube (52) de communication commun, sensiblement cylindrique du type dénommé manchon thermique, qui permet d'obtenir une dilatation thermique différente d'une paroi (58) supérieure de la chambre (50) de répartition d'air et des tubes (36) de répartition d'air.

2. Centrale suivant la revendication 1, caractérisée en ce que les tubes de répartition d'air ont une section transversale sensiblement rectangulaire.

3. Centrale suivant la revendication 1 ou 2, caractérisée en ce que le rapport entre la hauteur et la largeur des tubes (36) de répartition d'air est supérieur à 2:1 et, de préférence, supérieur à 3:1.

4. Centrale suivant l'une quelconque des revendications précédentes, caractérisée en ce que le tube (52) de communication, du type à manchon thermique comprend un manchon intérieur (54) et un manchon extérieur (56), le manchon intérieur (54) étant relié à son extrémité supérieure à au moins deux tubes (36) de répartition d'air, les manchons (54, 56) étant reliés à leur extrémité inférieure l'un à l'autre et le manchon extérieur (56) étant relié à son extrémité supérieure à une paroi (58) de la chambre (50) de répartition d'air.

5. Centrale suivant la revendication 4, caractérisée en ce que le tube (52) de communication est formé d'une partie de transition (54b) de section transversale rectangulaire dans le plan de liaison aux tubes (36) de répartition d'air.

6. Centrale suivant l'une quelconque des revendications précédentes, caractérisée en ce que
l'enceinte (12) du lit est formée d'au moins deux cendriers (40),
la chambre (50) de répartition d'air est interposée entre les cendriers (40), et
les parois latérales (44, 46) des cendriers (40) forment également des parois latérales de la chambre (50) de répartition d'air.

7. Centrale suivant l'une quelconque des revendications précédentes, caractérisée en ce que
un premier conduit (70) vertical est prévu en-dessous de la chambre (50) de répartition d'air,
au moins une chambre de combustion (72) de démarrage, destinée à préchauffer le lit (16), est disposée dans la partie inférieure du premier conduit (70),
il est prévu, dans le premier conduit (70), un second conduit (76) formant une sortie de la chambre de combustion (72) de démarrage,
entre les conduits (70, 76) est prévue une paroi (78) subdivisant l'espace annulaire compris entre les deux conduits (70,76) en un espace supérieur (80) et en un espace inférieur (82),
les deux espaces (80, 82) entre les conduits (70,76) communiquent avec une source (30) d'air comprimé, et
une vanne pour l'air (94) est prévue dans la liaison entre la source (30) d'air comprimé et l'espace supérieur (80).
